# EUROPÄISCHE PATENTSCHRIFT

(11) **EP 0 238 977 B1**
(45) Veröffentlichungstag und Bekanntmachung des Hinweises auf die Patenterteilung: **29.06.1994**
(21) Anmeldenummer: 87103846.9
(22) Anmeldetag: 17.03.1987
(51) Int. Cl.: G02B 6/42

(54) **Sende- und Empfangsmodul für ein bidirektionales Kommunikationsnetz, insbesondere ein Breitband-ISDN**
Emission-reception module for a bidirectional communication network, particularly a broadband ISDN
Module émission-réception pour un réseau de communication bidirectionnelle, particulièrement un RNIS à large bande

(30) Priorität: 27.03.1986 DE 3610404
(43) Veröffentlichungstag der Anmeldung: 30.09.1987
(73) Patentinhaber: SIEMENS AKTIENGESELLSCHAFT, 80333 München (DE)
(72) Erfinder: Keil, Rudolf, Dr., D-8000 München 45 (DE); Mayerhofer, Franz, D-8039 Puchheim (DE); Althaus, Hans Ludwig, Dr., D-8411 Lappersdorf (DE); Klement, Ekkehard, Dr., D-8000 München 60 (DE)

(56) Entgegenhaltungen:
- EP-A- 0 159 558
- EP-A- 0 204 224
- DE-A- 3 232 793
- DE-A- 3 307 466
- GB-A- 2 162 336
- JP-A-60 153 011
- US-A- 4 357 072

## Beschreibung

Die vorliegende Erfindung betrifft einen Sende- und Empfangsmodul für ein bidirektionales Kommunikationsnetz, insbesondere ein Breitband-ISDN, nach dem Oberbegriff des Patentanspruchs 1.

Aus der DE-A-32 32 793 ist ein Koppelglied mit im wesentlichen allen Merkmalen des Oberbegriffs des Patentanspruchs 1 bekannt, bei dem ein wesentlicher Bestandteil des Gehäuses ein Unterteil ist, das im Arbeitstemperaturbereich dieses Gliedes einen geringen temperaturabhängigen Ausdehnungskoeffizienten aufweist, wodurch temperaturabhängige störende Dejustierungen des Koppelgliedes vermieden werden. Das Koppelglied weist Lichtwellenleiter sowie optische Linsen umfassende optische Bauteile auf, die in Vertiefungen des Unterteils durch Kleben befestigt sind. Ein Halbleiterlaser ist auf einer Wärmesenke in Form eines Kupferblocks befestigt. Dieser Kupferblock ist durch Kleben auf dem Unterteil fixiert. Das bedeutet, daß der Halbleiterlaser und die optischen Linsen auf einem gemeinsamen, fest mit dem Gehäuse verbundenen Trägerkörper mit einem geringen temperaturabhängigen Ausdehnungskoeffizienten fixiert sind, und daß zwischen den Halbleiterlaser und dem Trägerkörper ein Block aus einem gut wärmeleitenden Material vorgesehen ist.

Die im Anspruch 1 angegebene Erfindung zielt ab auf die Erzielung einer dejustagesicheren Ausführung eines solchen Moduls in Verbindung mit einer in Bezug auf die Justage einfachen Herstellungsmöglichkeit dieses Moduls.

Insbesondere ist es Aufgabe der Erfindung, aufzuzeigen, wie ein Modul der genannten Art dejustagesicher ausgestaltet werden kann.

Diese Aufgabe wird ausgehend von einem Modul der eingangs genannten Art durch die im kennzeichnenden Teil des Patentanspruchs 1 angegebenen Merkmale gelöst.

Dieser Lösung liegt die Erkenntnis zugrunde, daß bei einem Modul der eingangs genannten Art die empfindlichste Stelle zwischen dem Sender und der sendernahen Linse liegt. Es wurde gefunden, daß bei typischen Brennweiten der verwendeten Linsen im Bereich eines Millimeters und darunter etwaige Dejustagen zwischen dem Sender und der sendernahen Linse kleiner als 0,5 »m sein müssen. Dagegen sind zwischen der senderfernen Linse und dem Ende der Faser Dejustagen von bis zu 40 »m in lateraler Richtung und bis zu 100 »m in faseraxialer Richtung zulässig. Danach soll unter "dejustagesicherer Fixierung" verstanden werden, daß zwischen dem Sender und der sendernahen Linse allenfalls Dejustagen zulässig sind, die kleiner als 0,5 »m sind.

Bevorzugte und vorteilhafte Ausgestaltungen eines Moduls nach Anspruch 1 gehen aus den Ansprüchen 2 und 3 hervor.

Der im Anspruch 4 angegebene Modul hat den Vorteil, daß er in einfachen Justageschritten, die mit dem Konzept des Moduls nach Anspruch 1 kompatibel sind, hergestellt werden kann.

Bevorzugte und vorteilhafte Ausgestaltungen der Lichtstrahltrenneinrichtung dieses Moduls gehen aus den Ansprüchen 5 bis 15 hervor, wobei insbesondere die Ausgestaltung nach Anspruch 8 in Bezug auf die Beseitigung eines möglichen Nebensprechens günstig ist.

Die Ansprüche 14 und 15 sind auf zwei alternative Ausgestaltungen des Strahlengangs gerichtet, von denen die eine zur Fokussierung des Lichts der anderen Wellenlänge λ₂ auf den Detektor eine zusätzliche Linse verwendet, während bei der anderen Alternative die senderferne Linse selbst diese Fokussierung bewirkt.

Vorzugsweise bestehen gemäß Anspruch 16 die Linsen aus Kugellinsen. Diese Linsen sind billig und können leicht justiert werden.

Im Hinblick auf die Fixierung der senderfernen Linse können die in den Ansprüchen 17 und 18 angegebenen alternativen Ausgestaltungen verwendet werden.

Eine weitere bevorzugte Ausgestaltung verwendet gemäß Anspruch 19 einen zusammen mit dem Detektor auf einem gemeinsamen Substrat integrierten elektrischen Vorverstärker.

Wie die beiden alternativen Modulausgestaltungen nach den Ansprüchen 17 und 18 in einfachen Justageschritten hergestellt werden können, geben die Ansprüche 21 bis 23 an.

Bei allen diesen Verfahren ist es zweckmäßig, gemäß Anspruch 24 die Justierung vergrößert auf einem Fernsehschirm zu überwachen.

Die Erfindung wird anhand der Figuren in der nun folgenden Beschreibung näher erläutert. Von den Figuren zeigen:
- Figur 1: einen horizontalen Schnitt längs der Achse A in Figur 2 durch einen Modul, bei dem die senderferne Linse im Gehäuse aufgenommen und fixiert ist,
- Figur 2: einen Ausschnitt aus einem vertikalen Schnitt längs der Achse A durch den Modul nach Figur 1, der den Trägerkörper mit dem Sender und der senderfernen Linse zeigt, die darauf befestigt sind,
- Figur 3: einen Ausschnitt aus einem axialen Horizontalschnitt eines Moduls, bei dem die senderferne Linse zusammen mit dem Ende einer Faser in einem Anschlußteil befestigt ist, der aber sonst so ausgebildet ist, wie der Modul nach Figur 1,
- Figur 4: in vereinfachter Darstellung eine der Figur 1 entsprechende Draufsicht auf das Innere eines Moduls, bei dem die senderferne Linse selbst das Licht auf den Detektor fokussiert,
- Figuren 5a bis 5d: in einer der Figur 1 entsprechenden vereinfachten Darstellung verschiedene Justagestufen eines ersten Verfahrens zur Herstellung des Moduls,
- Figur 5e: eine der Figur 5b entsprechende Alternative einer Justagestufe, und
- Figur 6a bis 6c: in einer den Figuren 5a bis 5d und der Figur 5e entsprechenden Darstellung Justagestufen eines zweiten Verfahrens zur Herstellung eines Moduls.

Die Figuren sind nicht im Maßstab gezeichnet.

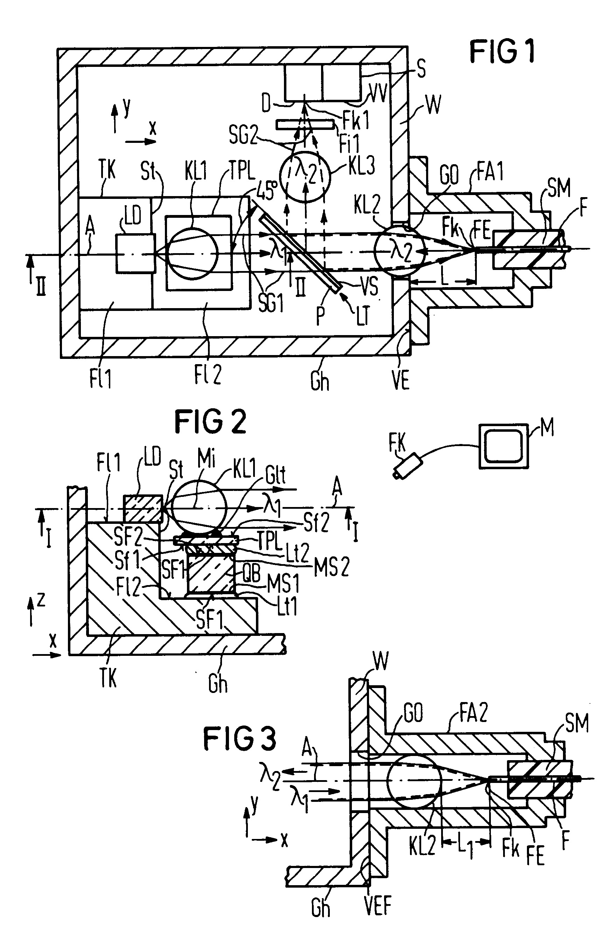

Bei dem in Figur 1 dargestellten Modul ist in dem Gehäuse Gh der gestufte Trägerkörper TK aus beispielsweise Kupfer fixiert. Auf der höherliegenden Fläche Fl1 ist unmittelbar der Sender LD, beispielsweise in Form einer Laserdiode, fixiert, die etwas über die Stufe übersteht und in einer herkömmlichen Standardtechnik fixiert werden kann. Die sendernahe Linse KL1 in Form einer Kugellinse ist über der tieferliegenden Fläche Fl2 des Trägers TK so fixiert, daß die Achse A der Laserdiode, längs welcher der Laserstrahl ausgesandt wird, mit dem Mittelpunkt Mi der Kugellinse zusammenfällt.

Zur Fixierung der Kugellinse KL1 ist ein Block QB aus schlecht wärmeleitendem Material mit einer Seite SF1, auf der eine Metallschicht MS1 aufgebracht ist, mittels eines Lotes Lt1 auf die tieferliegende Flache Fl2 des Trägerkörpers gelötet. Auf die von dieser tieferliegenden Fläche Fl2 abgekehrte Seite SF2 des Blockes QB, auf der eine Metallschicht MS2 aufgebracht ist, ist ein Trägerplättchen TPl mit einer metallischen Oberflache SF1 mittels eines Lotes Lt2 gelötet. Auf die nach oben gekehrte metallisches Oberfläche Sf2 des Trägerplättchens TPl ist mittels eines Glaslotes Glt die Kugellinse KL1 gelötet.

Der Block QB kann beispielsweise aus Quarzglas und das Trägerplättchen TPl beispielsweise aus einem beidseitig metallisierten Siliziumplättchen bestehen. Es könnte beispielsweise auch ganz aus Metall bestehen.

Die Justierung zwischen der Laserdiode LD und der sendernahen Kugellinse KL1 relativ zueiander wird zweckmäßigerweise so vorgenommen, daß die Laserdiode LD zunächst auf dem Trägerkörper TK fixiert wird und dann die Kugellinse KL1 auf die Diode einjustiert wird. Dies erfolgt am zweckmäßigsten unter Ausnutzung der Weichheit des heißen Lotes Lt2. Ein derartiges Verfahren und seine Durchführung ist bereits in der älteren deutschen Patentanmeldung P 35 19 260.7 vorgeschlagen und kann auch hier angewendet werden.

Der Trägerblock TK soll aus gut wärmeleitendem Material bestehen, damit er die von der Laserdiode LD erzeugte Wärme gut ableitet. Die Fixierung der lasernahen Linse KL1 auf demselben Trägerkörper TK gewahrleistet, daß zwischen der Laserdiode LD und dieser Linse KL1 etwaige Dejustierungen kleiner als 0,5 »m bleiben.

Das von der Laserdiode LD divergent ausgesandte Laserlicht der Wellenlänge λ₁ wird von der sendernahen Kugellinse KL1 in paralleles Licht gebündelt, das sich längs der Achse A ausbreitet. Im Strahlengang SG1 dieses Lichts ist als Lichtstrahltrenneinrichtung LT ein im Winkel von 45° zur Achse A geneigter wellenlängenselektiv teildurchlässiger Spiegel angeordnet, der für die eine Wellenlänge λ₁ durchlässig ist, für eine von der Faser F her Zugeleitete Wellenlänge λ₂ dagegen reflektierend wirkt. Der wellenlängenselektiv teildurchlässige Spiegel besteht aus einem Plättchen P aus transparentem Material, auf das ein Interferenzfilter in Form einer dielektrischen Vielfachschicht VS aufgebracht ist.

Das durch die Lichtstrahltrennvorrichtung LT hindurchgegangene parallele Licht der einen Wellenlänge λ₁ trifft auf eine in einer Öffnung GO der Wand W des Gehäuses Gh angeordnete und fixierte senderferne Linse KL2, die ebenfalls als Kugellinse ausgebildet ist. Diese Linse KL2 fokussiert das zugeleitete Licht der einen Wellenlänge λ₁ auf einen Fokus Fk, der in einem definierten Abstand L von der Wand W des Gehäuses Gh angeordnet ist.

An der Wand W ist ein Anschlußteil FA1 befestigt, in dem eine von einem Schutzmantel SM umgebene Faser F so fixiert ist, daß ihr Ende FE mit dem Fokus Fk zusammenfällt. Dabei ist es zweckmäßig, das Ende FE der Faser F in dem Anschlußteil FA1 von vorneherein so zu fixieren, daß dieses Ende FE im definierten Abstand L von dem vorderen Ende VE des Anschlußteils FA1 angeordnet ist. Wird in diesem Fall das Anschlußteil FA1 mit dem vorderen Ende VE an die Wand W des Gehäuses Gh angesetzt, so befindet sich das Ende FE der Faser F bereits im definierten Abstand L von der Wand W und es muß nur noch eine Justierung in y- und z-Richtung ausgeführt werden.

Licht der anderen Wellenlänge λ₂, das von dem im Fokus Fk liegenden Ende FE der Faser F divergent in Richtung der senderfernen Linse KL2 abgestrahlt wird, wird von dieser Linse in paralleles Licht gebündelt und trifft als solches auf die Lichtstrahltrennvorrichtung, die dieses Licht um 90° umlenkt und daher aus dem Strahlengang SG1 herauslenkt. Im freien Strahlengang SG2 dieses herausgelenkten Lichts ist eine Linse KL3, beispielsweise in Form einer Kugellinse, angeordnet, die dieses Licht auf einen Fokus Fk1 fokussiert. In diesem Fokus Fk1 ist das nicht dargestellte Fenster eines Detektors D angeordnet, der beispielsweise zusammen mit einem nachgeschalteten elektrischen Vorverstärker VV auf einem gemeinsamen Substrat S integriert. Zur Verminderung des Nebensprechens ist in diesem freien Strahlengang SG2 des Lichts der anderen Wellenlänge λ₂ ein Filter Fi1 angeordnet, das für die andere Wellenlänge λ₂ durchlässig ist, nicht aber für die eine Wellenlänge λ₁.

Alternativ zum Modul nach Figur 1 können auch gemäß Figur 3 die senderferne Linse KL2 und die Faser F gemeinsam in einem Anschlußteil FA2 koaxial zueinander angeordnet und fixiert sein. Dabei sind diese Linse KL2 und das Ende FE der Faser F in einem solchen festen Abstand L₁ voneinander anzuordnen, daß parallel einfallendes Licht auf dieses Ende FE fokussiert wird.

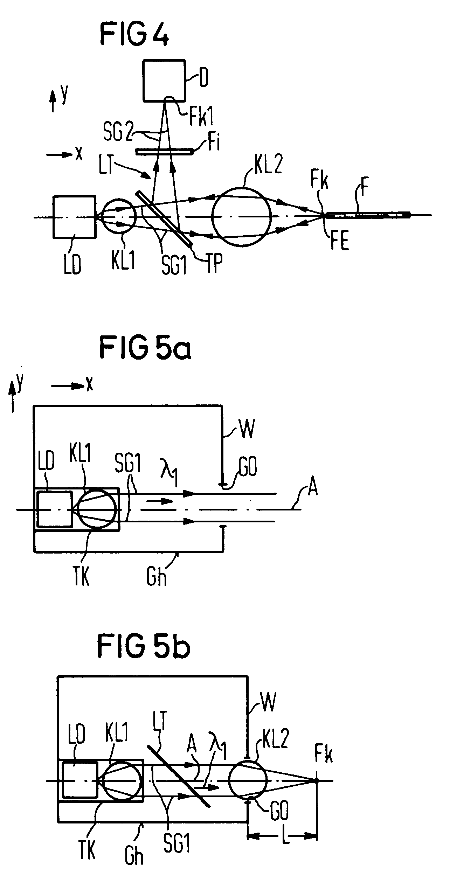

Diese Linse KL3, die das Licht der anderen Wellenlänge λ₂ auf den Detektor D fokussiert, kann eingespart werden, wenn die sendernahe Linse KL1 das vom Sender LD divergent ausgesandte Licht der einen Wellenlänge λ₁ nicht in parallele, sondern nur in schwacher divergentes Licht bündelt, so wie es in Figur 4 dargestellt ist. Das vom Ende FE der Faser F divergent abgestrahlte Licht der anderen Wellenlänge λ₂ wird in diesem Fall von der senderfernen Linse KL2 in konvergentes Licht umgewandelt, das einen Fokus Fk1 aufweist, in dem der Detektor D angeordnet werden kann.

Auch kann die Lichtstrahltrenneinrichtung LT aus einem im Strahlengang SG1 des Lichts der einen Wellenlänge λ₁, zwischen der sendernahen und senderfernen Linse KL1 bzw. KL2 im Winkel von beispielsweise 45° zur Achse A dieses Strahlengangs geneigt angeordneten, teildurchlässigen Spiegel TP mit für beide Wellenlängen λ₁, λ₂ gleichen Transmissions- oder Reflexionsverhalten bestehen. Jedoch muß in diesem Fall im freien Strahlengang SG2 des den Detektor D zugeleiteten Lichts der anderen Wellenlänge λ₂ ein optisches Filter Fi angeordnet sein, das für die eine Wellenlänge λ₁ undurchlässig, für die andere Wellenlänge λ₂ dagegen durchlässig ist. Diese Lichtstrahltrenneinrichtung LT ist als in einen Modul nach Figur 4 eingebaut dargestellt. Sie kann jedoch für jeden anderen Modul verwendet werden.

Der teildurchlässige Spiegel TP kann in Form eines Plättchens aus einem für beide Wellenlängen λ₁, λ₂ gleich teildurchlässigen Material ausgebildet sein. Das Filter Fi kann in Form eines Plättchens aus einem für die eine Wellenlänge λ₂ undurchlässigen, für die andere Wellenlange λ₂ dagegen transparenten Material ausgebildet sein.

Ein im freien Strahlengang SG2 des den Detektor D zugeleiteten Lichst der anderen Wellenlänge λ₂ kann unmittelbar auf dem Detektor D aufgebracht sein.

Jedes in einem Modul verwendete Filter kann als Interferenzfilter ausgebildet sein.

Die Figuren 5a bis 5 d zeigen in schematischer Darstellung einzelne Justierschritte, wie sie bei der Herstellung eines Moduls nach Figur 1 ausgeführt werden können.

Zunächst werden die Laserdiode LD und die sendernahe Kugellinse KL1 auf dem fest mit dem Gehäuse Gh verbundenen Trägerkörper TK relativ zueinander in allen drei Richtungen x, y und z so einjustiert, daß das von dieser Linse KL1 gebündelte Licht der einen Wellenlänge λ₁ durch eine Öffnung GO in einer gegenüberliegenden Wand W des Gehäuses Gh austritt und die optische Achse A dieses gebündelten Lichts zu dieser Wand W im wesentlichen senkrecht steht (Figur 5a).

Auf diese Achse A werden die Lichtstrahltrenneinrichtung LT und die senderferne Linse KL2 justiert und am Gehäuse Gh fixiert, wobei die senderferne Linse KL2 so einjustiert wird, daß der von ihr erzeugte Fokus Fk in einem definierten Abstand L von der Gehäusewand W angeordnet ist (Figur 5b).

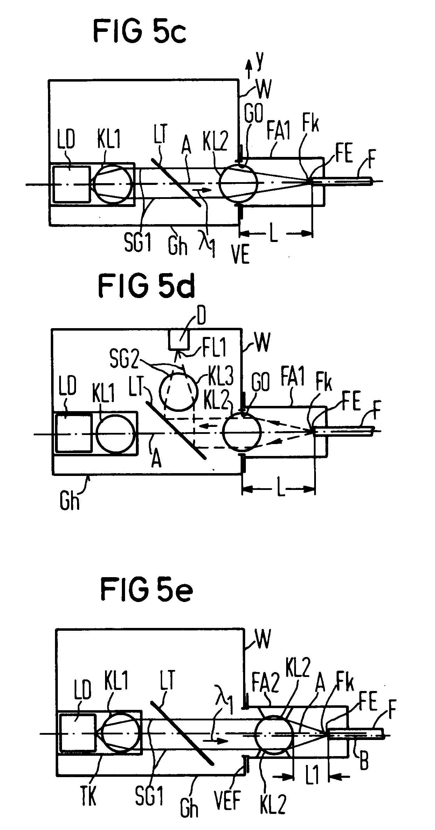

Ein an der Wand W angesetztes Anschlußteil FA1, in dem das Ende FE der Faser F in dem definierten Abstand L von dem der Wand zuzukehrenden vorderen Ende VE des Anschlußteils FA1 fixiert ist, wird durch Verschieben in den zur Wand W parallelen Richtungen y und z so einjustiert und am Gehäuse Gh fixiert, daß das Ende FE der Faser F im Fokus Fk des Lichts der einen Wellenlange λ₁ angeordnet ist (Figur 5c).

Der Detektor D wird auf den Fokus Fk1 des von der Lichtstrahltrenneinrichtung LT ausgehenden freien Strahlengangs SG2 des Lichts der anderen Wellenlänge λ₂ einjustiert und fixiert, das aus dem Ende FE der Faser F divergent austritt und von der senderfernen Linse KL2 gebündelt wird (Figur 5d).

Wird wie im Fall der Figur 5d eine Linse KL3 zum Fokussieren des freien Strahlengangs SG2 verwendet, so ist diese Linse vor oder gleichzeitig mit dem Detektor D auf die Achse dieses Strahlengangs einzujustieren.

Bei Verwendung eines Anschlußteils FA2 nach Figur 3 kann nach dem Verfahren gemäß den Figuren 5a bis 5d vorgegangen werden. Es ist nur die Justage der senderfernen Linse KL2 im Gehäuse Gh, wie sie in der Figur 5b dargestellt ist, zu ersetzen durch die in Figur 5e angedeutete Vorgehensweise. Danach werden auf die Achse A die Lichtstrahltrenneinrichtung LT und das Anschlußteil FA2 nach Figur 3 justiert und am Gehäuse Gh fixiert, wobei bei der Justage des Anschlußteils FA2 darauf geachtet wird, daß die gemeinsame Achse B von Faser F und senderferner Linse KL2 mit der Achse A des gebündelten Lichts der einen Wellenlänge λ₁ zusammenfällt. Es dürfen zwischen diesen beiden Achsen A und B möglichst keine Winkel auftreten. Da die Wand W und die vordere Endfläche VEF gut definierte ebene Flächen sind und die Achse B sehr genau senkrecht zu dieser Endfläche VEF ausgerichtet werden kann, läßt sich die Achsparallelität zwischen den Achsen A und B einfach erreichen, wenn man bei der Justage nach Figur 5a bereits für eine möglichst genaue senkrechte Ausrichtung der Achse A zur Wand W sorgt. Es sind dann ebenfalls nur noch Justierungen in y- und z-Richtungen auszuführen.

Ist das Anschlußteil FA2 richtig fixiert und justiert, wird der Detektor D auf den Fokus Fk1 des von der Lichtstrahltrenneinrichtung LT ausgehenden freien Strahlengangs SG2 des Lichts der anderen Wellenlänge λ₂ einjustiert und fixiert, das aus dem Ende FE der Faser F divergent austritt und von der senderfernen Linse KLl2 gebündelt wird. Diese Endstufe entspricht der Endstufe nach Figur 5d.

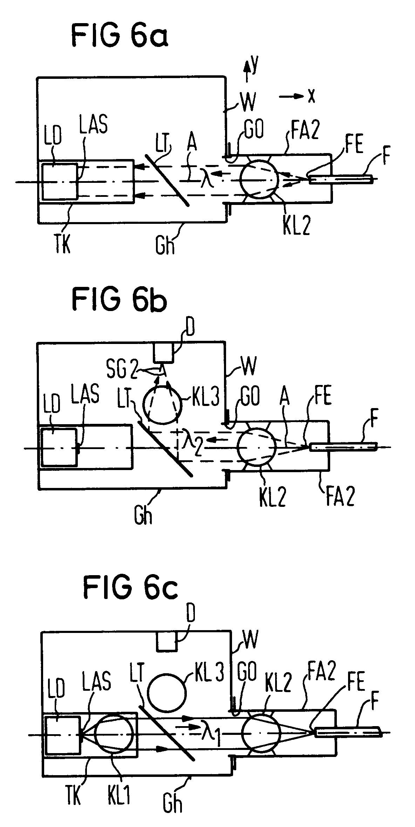

Bei der Herstellung eines Moduls nach Figur 1 mit einem Abschlußteil FA2 nach Figur 3 kann auch so vorgegangen werden, wie es in den Figuren 6a bis 6c schematisch dargestellt ist.

Danach wird zuerst das Anschlußteil FA2 an der Wand W des Gehäuses Gh so einjustiert und fixiert, daß die Achse A eines aus dem Ende FE der Faser F divergent austretenden und von der senderfernen Linse KL2 gebündelten und durch die Lichtstrahltrenneinrichtung LT hindurchgegangenen Lichts auf die im Gehäuse Gh fixierte Laserdiode LD, insbesondere auf deren Lichtaustrittsstelle LAS gerichtet ist (Figur 6a).

Auf den Fokus Fk1 in dem von der Lichtstrahltrenneinrichtung LT ausgehenden freien Strahlengang SG2 wird der Detektor D justiert und fixiert, gegebenenfalls mit Hilfe einer Linse KL3 (Figur 6b).

Danach wird die sendernahe Linse KL1 in allen drei Richtungen x, y und z auf die Laserdiode LD derart einjustiert, daß das Ende FE der Faser F und die Lichtaustrittsstelle LAS der Laserdiode LD aufeinander abgebildet sind bzw. zueinander konjugierte Punkte bilden (Figur 6c). Diese letzte Justierung erfolgt zweckmäßigerweise mit dem von der Laserdiode LD abgestrahlten Licht der einen Wellenlänge λ₁.

Es ist zweckmäßig, bei allen diesen Justierungen, wenigstens aber bei der relativen Justierung von Sender LD und sendernaher Linse KL1 die Justierung vergrößert auf einem Fernsehschirm M zu überwachen. Dazu kann beispielsweise ein vergrößertes Bild der zu justierenden Teile mit einer Fernsehkamera FK (siehe Figur 2) aufgenommen und in ein Bild auf dem Fernsehschirm M umgewandelt werden.

### Bezugszeichenliste

- Gh: Gehäuse
- TK: gestufter Trägerkörper
- Fl1: höherliegende Fläche
- LD: Sender
- KL1: sendernahe Linse
- Fl2: tieferliegende Fläche
- A: Achse des Senders
- Mi: Mittelpunkt der sendernahen Linse KL1
- QB: Block aus schlecht wärmeleitendem Material
- SF1: eine Seite des Blocks QB
- MS1: Metallschicht
- Lt₁: Lot
- SF2: von der tieferliegenden Fläche abgekehrte Seite des blocks QB
- MS2: Metallschicht
- TP1: Trägerplättchen
- Sf1: metallische Oberfläche
- Lt2: Lot
- Sf2: nach oben gekehrte metallische Oberfläche
- GLt: Glaslot
- l: abgestrahlte Wellenlänge
- SG1: Strahlengang des abgestrahlten Lichts
- LT: Lichtstrahltrenneinrichtung
- F: Faser
- P₂: von der Faser F zugeleitetes Licht
- P: Plättchen aus transparentem Material
- VS: dielektrische Vielfachschicht
- GO: Öffnung
- W: Wand
- KL2: senderferne Linse
- Fk: Fokus
- L: Abstand
- FA1: Anschlußteil
- SM: Schutzmantel
- FE: Endeder Faser F
- VE: vorderes Ende des Anschlußteils
- SG2: freier Strahlengang
- KL3: Linse
- FK1: Fokus
- D: Detektor
- VV: Vorverstärker
- S: Substrat
- Fi: Filter
- FA2: Anschlußteil
- L₁: Abstand
- TP: teildurchlässiger Spiegel
- B: Achse
- VEF: vordere Endfläche
- LAS: Lichtaustrittsstelle
- M: Fernsehschirm
- FK: Fernsehkamera

## Patentansprüche

1. Sende- und Empfangsmodul für ein bidirektionales optisches Kommunikationsnetz, insbesondere für ein Breitband-ISDN, mit
- einem optischen Sender (LD) zum Aussenden einer bestimmten Lichtwellenlänge (λ₁),
- zwei im Strahlengang (SG1) des vom Sender (LD) divergent ausgesandten Lichts hintereinander angeordneten optischen Linsen (KL1, KL2), von denen die sendernahe Linse (KL1) das divergente Licht bündelt und die senderferne Linse (KL2) dieses gebündelte Licht auf einen bestimmten Fokus (Fk) fokussiert,
- einer im Strahlengang (SG1) des Lichts zwischen den beiden Linsen (KL1, KL2) angeordneten und für die eine Wellenlänge (λ₁) durchlässigen Lichtstrahltrenn ein richtung (LT), die ein von dem Fokus (Fk) des Lichts der einen Wellenlänge (λ₁) in Richtung der senderfernen Linse (KL2) divergent ausgestrahltes und von dieser Linse (KL2) gebündeltes Licht einer anderen bestimmten Wellenlänge (λ₂) zumindest teilweise vom Strahlengang (SG1) des Lichts der einen Wellenlänge (λ₁) trennt,
- einem für die zweite Wellenlänge (λ₂) empfindlichen Detektor (D), dem das von dem Strahlengang (SG1) getrennte Licht der zweiten Wellenlänge (λ₂) zugeleitet ist, und mit
- einem Gehäuse (Gh), in dem zumindest der Sender (LD), die sendernahe Linse (KL1), die Lichtstrahltrennenrichtung (LT) und der Detektor (D) aufgenommen sind, und bei dem ein Ende (FE) einer optischen Faser so anschließbar ist, daß dieses Ende (FE) in dem relativ zum Gehäuse (Gh1) ortsfesten Fokus (Fk) des Lichts der einen Wellenlänge (λ₁) angeordnet ist,
**dadurch gekennzeichnet,**
daß der Sender (LD) und die sendernahe Linse (KL1) auf einem gemeinsamen, fest mit dem Gehäuse verbundenen oder verbindbaren, als Wärmesenke für den Sender (LD) dienenden Trägerkörper (TK) fixiert sind, und zwischen der sendernahen Linse (KL1) und dem Trägerkörper (TK) ein Block (QB) aus einem im Vergleich zum Trägerkörper (TK) schlechter wärmeleitenden Material vorgesehen ist.

2. Modul nach Anspruch 1, **dadurch gekennzeichnet,** daß der gemeinsame Trägerkörper (TK) eine Stufe (St) aufweist, und daß der Sender (LD) auf einer höherliegenden Fläche (Fl1) des Trägerkörpers (TK) fixiert ist, während die sendernahe Linse (KL1) über einer tieferliegenden Fläche (Fl2) des Trägerkörpers (TK) in Höhe des Senders (LD) befestigt ist.

3. Modul nach Anspruch 2, **dadurch gekennzeichnet,** daß der Block (QB) aus dem schlecht warmeleitenden Material mit einer flächig metallisierten Seite (SF1) mittels Lot (Lt1) auf die tieferliegende Fläche (Fl2) des Trägerkörpers (TK) gelötet ist, daß auf eine von dieser tieferliegenden Fläche (Fl2) abgekehrte, flächig metallisierte Seite (SF2) des Blocks (QB) ein Trägerplättchen (TP1) mit einer metallischen Oberfläche (Sf1) mittels Lot (Lt2) gelötet ist, und daß auf dem Trägerplättchen (TP1) die sendernahe Linse (KL1) fixiert ist.

4. Modul nach einem der Ansprüche 1 bis 3,
**dadurch gekennzeichnet,**
daß die Lichtstrahltrenneinrichtung (LT) derart ausgebildet ist, daß das vom Strahlengang (SG1) des Lichts der einen Wellenlänge (λ₁) getrennte Licht der anderen Wellenlänge (λ₂) im wesentlichen rechtwinkelig zum Strahlengang (SG1) des Lichts der einen Wellenlänge (λ₁) dem Detektor (D) zugeleitet und auf den Detektor (D) fokussiert ist.

5. Modul nach Anspruch 4, **dadurch gekennzeichnet,** daß die Lichtstrahltrenneinrichtung (LT) aus einem wellenlängenselektiven teildurchlässigen Spiegel (VS, P) besteht, der in einem Winkel zur Achse (A) des Strahlengangs (SG1) des Lichts der einen Wellenlänge (λ₁) geneigt ist und der für die eine Wellenlänge (λ₁) durchlässig ist und für die andere Wellenlänge (λ₂) reflektierend wirkt.

6. Modul nach Anspruch 5, **dadurch gekennzeichnet,** daß der wellenlängenselektiv teildurchlässige Spiegel (VS, P) ein Interferenzfilter aufweist.

7. Modul nach Anspruch 6, **dadurch gekennzeichnet,** daß das Interferenzfilter in Form einer auf einem Plättchen (P) aus transparentem Material aufgebrachten dielektrischen Vielfachschicht (VS) besteht.

8. Modul nach einem der Ansprüche 5 bis 7, **dadurch gekennzeichnet,** daß im freien Strahlengang (SG2) des dem Detektor (D) zugeleiteten Lichts der anderen Wellenlänge (λ₂) ein optisches Filter (Fi1) angeordnet ist, das für die eine Wellenlänge (λ₁) undurchlässig, für die andere Wellenlänge (λ₂) dagegen durchlässig ist.

9. Modul nach Anspruch 4, **dadurch gekennzeichnet,** daß die Lichtstrahltrenneinrichtung (LT) aus einem im Strahlengang (SG1) des Lichts der einen Wellenlänge (λ₁) zwischen den beiden Linsen (KL1, KL2) und im Winkel zur Achse (A) dieses Strahlengangs (SG1) angeordneten, teildurchlässigen Spiegel (TP) mit für beide Wellenlängen (λ₁, λ₂) gleichem Transmissions- oder Reflexionsverhalten und aus einem im freien Strahlengang (SG2) des dem Detektor (D) zugeleiteten Lichts der anderen Wellenlänge (λ₂) angeordneten optischen Filter (Fi) besteht, das für die eine Wellenlänge (λ₁) undurchlässig, für die andere Wellenlänge (λ₂) dagegen durchlässig ist.

10. Modul nach Anspruch 9, **dadurch gekennzeichnet,** daß der teildurchlässige Spiegel (TP) in Form eines Plättchens aus einem für beide Wellenlängen (λ₁, λ₂) gleich teildurchlässigen Material ausgebildet ist.

11. Modul nach Anspruch 9 oder 10, **dadurch gekennzeichnet,** daß das Filter (Fi) in Form eines Plättchens aus einem für die eine Wellenlänge (λ₁) undurchlässigen, für die andere Wellenlänge (λ₂) dagegen transparenten Material ausgebildet ist.

12. Modul nach einem der Ansprüche 8 bis 11, **dadurch gekennzeichnet,** daß das Filter (Fi1; Fi) unmittelbar auf dem Detektor (D) aufgebracht ist.

13. Modul nach einem der Ansprüche 8 bis 12, **dadurch gekennzeichnet,** daß das Filter (Fi1; Fi) in Form eines Interferenzfilters ausgebildet ist.

14. Modul nach einem der Ansprüche 4 bis 13, **dadurch gekennzeichnet,** daß die sendernahe Linse (KL1) das vom Sender (LD) divergent abgestrahlte Licht der einen Wellenlänge (λ₁) in paralleles oder schwach divergentes Licht bündelt, und daß im freien Strahlengang (SG2) des Lichts der anderen Wellenlänge (λ₂) eine Linse (KL3) angeordnet ist, die dieses Licht auf den Detektor (D) fokussiert.

15. Modul nach einem der Ansprüche 4 bis 13, **dadurch gekennzeichnet,** daß die sendernahe Linse (KL1) das vom Sender (LD) divergent abgestrahlte Licht (λ₁) in ein schwächer divergentes Licht bündelt, das von der senderfernen Linse (KL2) fokussiert wird, so daß diese Linse (KL2) ein vom Fokus (Fk) divergent abgestrahltes Licht der anderen Wellenlänge (λ₂) von selbst fokussiert, wobei im Fokus (Fk1) dieses Lichts der Detektor (D) angeordnet ist.

16. Modul nach einem der vorhergehenden Ansprüche, **dadurch gekennzeichnet,** daß eine der Linsen eine Kugellinse ist.

17. Modul nach einem der vorhergehenden Ansprüche, **dadurch gekennzeichnet,** daß die senderferne Linse (KL2) in dem Gehäuse (Gh) aufgenommen und fixiert ist.

18. Modul nach einem der Ansprüche 1 bis 17, **dadurch gekennzeichnet,** daß die senderferne Linse (KL2) zusammen mit dem Ende (FE) der Faser (F) in einem an das Gehäuse (Gh) anschließbaren Anschlußteil (FA2) aufgenommen und fixiert ist.

19. Modul nach einem der vorhergehenden Ansprüche, **dadurch gekennzeichnet,** daß der Detektor (D) und ein dem Detektor (D) nachgeschalteter elektrischer Vorverstärker (VV) auf einem gemeinsamen Substrat integriert sind, das in dem Gehäuse (Gh) angeordnet ist.

20. Modul nach einem der vorhergehenden Ansprüche, **dadurch gekennzeichnet,** daß das Ende (FE) der optischen Faser an das Gehäuse (Gh1) anschließbar ist.

21. Verfahren zum Herstellen eines Moduls nach Anspruch 18, **dadurch gekennzeichnet,** daß der Sender (LD) und die sendernahe Linse (KL1) auf dem fest mit dem Gehäuse (Gh) verbundenen Trägerkörper (TK) relativ zueinander nach allen drei Richtungen (x, y, z) so einjustiert werden, daß das von dieser Linse (KL1) gebündelte Licht der einen Wellenlänge (λ₁) durch eine Öffnung (GO) in einer gegenüberliegenden Wand (W) des Gehäuses austritt und die optische Achse (A) dieses gebündelten Lichts zu dieser Wand (W) im wesentlichen senkrecht steht, daß auf diese Achse (A) die Lichtstrahltrenneinrichtung (LT) und die senderferne Linse (KL2) justiert und am Gehäuse (Gh) fixiert werden, wobei die senderferne Linse (KL2) so einjustiert wird, daß der von ihr erzeugte Fokus (Fk) in einem definierten Abstand (L) von der Gehäusewand (W) angeordnet ist, daß ein an der Gehäusewand (W) angesetztes Anschlußteil (FA), in dem das Ende (FE) der Faser (F) in dem definierten Abstand (L) von dem der Wand (W) zuzukehrenden vorderen Ende (VE) des Anschlußteils (FA1) fixiert ist, durch Verschieben in den zur Wand (W) parallelen Richtungen (y, z) so einjustiert und am Gehäuse (Gh) fixiert wird, daß das Ende (FE) der Faser (F) im Fokus (Fk) des Lichts der einen Wellenlänge (λ₁) angeordnet ist, und daß der Detektor auf den Fokus (Fk1) des von der Lichtstrahltrenneinrichtung (LT) ausgehenden freien Strahlengangs (SG2) des Lichts der anderen Wellenlänge (λ₂) einjustiert und fixiert wird, das aus dem Ende (FE) der Faser (F) divergent austritt und von der senderfernen Linse (KL2) gebündelt wird.

22. Verfahren zum Herstellen eines Moduls nach Anspruch 18, **dadurch gekennzeichnet,** daß der Sender (LD) und die sendernahe Linse (KL1) auf dem fest mit dem Gehäuse (Gh) verbundenen Trägerkörper (TK) relativ zueinander so nach allen drei Richtungen (x, y, z) einjustiert werden, daß das von dieser Linse (KL1) gebündelte Licht der einen Wellenlänge (λ₁) durch eine Öffnung (GO) in einer gegenüberliegenden Wand (W) austritt und die optische Achse (A) dieses gebündelten Lichts zu dieser Wand (W) senkrecht steht, daß auf diese Achse (A) die Lichtstrahltrenneinrichtung (LT) und das Anschlußteil (FA2), in dem die senderferne Linse (KL2) zusammen mit dem Ende (FE) der Faser (F) aufgenommen und fixiert ist, justiert und am Gehäuse (Gh) fixiert werden, wobei bei der Justage des Anschlußteils (FA2) darauf geachtet wird, daß die gemeinsame Achse (B) von Faser (F) und senderferner Linse (KL2) mit der Achse (A) des gebündelten Lichts der einen Wellenlänge (λ₁) zusammenfällt, und daß der Detektor auf den Fokus (Fk1) des von der Lichtstrahltrenneinrichtung (LT) ausgehenden Strahlengang (SG2) des Lichts der anderen Wellenlänge (λ₂) einjustiert und so fixiert wird, daß das Licht aus dem Ende (FE) der Faser (F) divergent austritt und von der senderfernen Linse (KL2) gebündelt wird.

23. Verfahren zur Herstellung eines Moduls nach Anspruch 19, **dadurch gekennzeichnet,** daß das Anschlußteil (FA2), in dem die senderferne Linse (KL2) zusammen mit dem Ende (FE) der Faser (F) aufgenommen und fixiert ist, an der Gehäusewand (W) so einjustiert und fixiert wird, daß die Achse (A) eines aus dem Ende (FE) der Faser (F) divergent austretenden und von der senderfernen Linse (KL2) gebündelten Lichts der anderen Wellenlänge (λ₂) auf den im Gehäuse (Gh) auf dem Trägerkörper (TK) fixierten Sender (LD) gerichtet ist, daß auf diese Achse (A) die Lichtstrahltrenneinrichtung (LT) einjustiert und fixiert wird, daß auf den Fokus (Fk1) in dem von der Lichtstrahltrenneinrichtung (LT) ausgehenden freien Strahlengang (SG2) der Detektor (D) justiert und fixiert wird, und daß danach die sendernahe Linse (KL1) in allen drei Richtungen (x, y, z) auf den Sender (LD) derart einjustiert wird, daß das Ende (FE) der Faser (F) und die Lichtaustrittsstelle (LAS) des Senders (LD) aufeinander abgebildet sind.

24. Verfahren nach einem der Ansprüche 21 bis 23, **dadurch gekennzeichnet,** daß zumindest die relative Justage von Sender (LD) und sendernaher Linse (KL1) vergrößert auf einem Fernsehschirm (M) überwacht wird.

## Claims

1. Transmitting and receiving module for a bidirectional optical communication network, particularly for a broadband ISDN, comprising
- an optical transmitter (LD) for transmitting a particular light wavelength (λ₁),
- two optical lenses (KL1, KL2) which are arranged behind one another in the beam path (SG1) of the light transmitted divergently from the transmitter (LD), of which lenses the lens (KL1) close to the transmitter focuses the divergent light and the lens (KL2) remote from the transmitter focuses this focused light onto a particular focal point (Fk),
- a light beam divider (LT) which is arranged in the beam path (SG1) of the light between the two lenses (KL1, KL2) and is transparent to the one wavelength (λ₁) and which at least partially divides a light of another particular wavelength (λ₂), which is divergently radiated from the focal point (Fk) of the light of the one wavelength (λ₁) in the direction of the lens (KL2) remote from the transmitter and is focused by this lens (KL2), from the beam path (SG1) of the light of the one wavelength (λ₁),
- a detector (D) which is sensitive to the second wavelength (λ₂) and which is supplied with the light of the second wavelength (λ₂) divided from the beam path (SG1), and comprising
- a housing (Gh) in which at least the transmitter (LD), the lens (KL1) close to the transmitter, the light beam divider (LT) and the detector (D) are accommodated and in which one end (FE) of an optical fibre can be connected in such a manner that this end (FE) is arranged at the focal point (Fk) of the light of the one wavelength (λ₁) which is stationary relative to the housing (Gh1),
characterized in that the transmitter (LD) and the lens (KL1) close to the transmitter are fixed in location on a common carrier body (TK) which is permanently connected or connectable to the housing and is used as a heat sink for the transmitter (LD), and a block (QB) of a material with poorer thermal conductivity in comparison with the carrier body (TK) is provided between the lens (KL1) close to the transmitter and the carrier body (TK).

2. Module according to Claim 1, characterized in that the common carrier body (TK) exhibits a step (St), and in that the transmitter (LD) is fixed in location on a higher surface (F11) of the carrier body (TK) whilst the lens (KL1) close to the transmitter is attached at the level of the transmitter (LD) via a lower surface (F12) of the carrier body (TK).

3. Module according to Claim 2, characterized in that the block (QB) of the material with poor thermal conductivity is soldered with a metallized surface (SF1) by means of solder (Lt1) onto the lower surface (F12) of the carrier body (TK), in that a carrier plate (TP1) is soldered with a metallic surface (Sf1) by means of solder (Lt2) onto a metallized surface (SF2) of the block (QB) facing away from this lower surface (F12), and in that the lens (KL1) close to the transmitter is fixed in location on the carrier plate (TP1).

4. Module according to one of Claims 1 to 3, characterized in that the light beam divider (LT) is constructed in such a manner that the light of the other wavelength (λ₂) divided from the beam path (SG1) of the light of the one wavelength (λ₁) is supplied to the detector (D) essentially at right angles to the beam path (SG1) of the light of the one wavelength (λ₁) and is focused onto the detector (D).

5. Module according to Claim 4, characterized in that the light beam divider (LT) consists of a wavelength-selective semitransparent mirror (VS, P) which is inclined at an angle to the axis (A) of the beam path (SG1) of the light of the one wavelength (λ₁) and which is transparent to the one wavelength (λ₁) and acts in a reflecting manner for the other wavelength (λ₂).

6. Module according to Claim 5, characterized in that the wavelength-selective semitransparent mirror (VS, P) exhibits an interference filter.

7. Module according to Claim 6, characterized in that the interference filter consists in the form of a dielectric multiple layer (VS) applied to a plate (P) of transparent material.

8. Module according to one of Claims 5 to 7, characterized in that an optical filter (Fi1) which is opaque to the one wavelength (λ₁) but transparent to the other wavelength (λ₂) is arranged in the free beam path (SG2) of the light of the other wavelength (λ₂) supplied to the detector (D).

9. Module according to Claim 4, characterized in that the light beam divider (LT) consists of a semitransparent mirror (TP) with identical transmission or reflection characteristic for both wavelengths (λ₁, λ₂), arranged in the beam path (SG1 of the light of the one wavelength (λ₁) between the two lenses (KL1, KL2) and at an angle to the axis (A) of this beam path (SG1), and of an optical filter (Fi), which is opaque to the one wavelength (λ₁) but transparent to the other wavelength (λ₂), which is arranged in the free beam path (SG2) of the light of the other wavelength (λ₂) supplied to the detector (D).

10. Module according to Claim 9, characterized in that the semitransparent mirror (TP) is constructed in the form of a plate of a material which is equally semitransparent to both wavelengths (λ₁, λ₂).

11. Module according to Claim 9 or 10, characterized in that the filter (Fi) is constructed in the form of a plate of a material which is opaque to the one wavelength (λ₁) but transparent to the other wavelength (λ₂).

12. Module according to one of Claims 8 to 11, characterized in that the filter (Fi1; Fi) is directly applied to the detector (D).

13. Module according to one of Claims 8 to 12, characterized in that the filter (Fi1; Fi) is constructed in the form of an interference filter.

14. Module according to one of Claims 4 to 13, characterized in that the lens (KL1) close to the transmitter focuses the light of the one wavelength (λ₁), which is divergently radiated by the transmitter (LD), into parallel or weakly divergent light, and in that, in the free beam path (SG2) of the light of the other wavelength (λ₂), a lens (KL3) is arranged which focuses this light onto the detector (D).

15. Module according to one of Claims 4 to 13, characterized in that the lens (KL1) close to the transmitter focuses the light of the one wavelength (λ₁), which is divergently radiated by the transmitter (LD), into a less divergent light which is focused by the lens (KL2 remote from the transmitter so that this lens (KL2) automatically focuses a light of the other wavelength (λ₂) which is divergently radiated by the focal point (Fk), the detector (D) being arranged at the focal point (Fk1) of this light.

16. Module according to one of the preceding claims, characterized in that one of the lenses is a spherical lens.

17. Module according to one of the preceding claims, characterized in that the lens (KL2) remote from the transmitter is accommodated and fixed in location in the housing (Gh).

18. Module according to one of Claims 1 to 17, characterized in that the lens (KL2) remote from the transmitter is accommodated and fixed in location, together with the end (FE) of the fibre (F), in a connecting part (FA2) which can be connected to the housing (Gh).

19. Module according to one of the preceding claims, characterized in that the detector (D) and an electrical preamplifier (VV) following the detector (D) are integrated on a common substrate which is arranged in the housing (Gh).

20. Module according to one of the preceding claims, characterized in that the end (FE) of the optical fibre can be connected to the housing (Gh1).

21. Method for producing a module according to Claim 18, characterized in that the transmitter (LD) and the lens (KL1) close to the transmitter are adjusted relative to one another in all three directions (x, y, z) on the carrier body (TK) permanently connected to the housing (Gh), in such a manner that the light of the one wavelength (λ₁) focused by this lens (KL1) emerges through an opening (GO) in an opposite wall (W) of the housing and the optical axis (A) of this focused light is essentially perpendicular to this wall (W), in that the light beam divider (LT) and the lens (KL2) remote from the transmitter are aligned with this axis (A) and are fixed in location at the housing (Gh), the lens (KL2) remote from the transmitter being adjusted in such a manner that the focal point (Fk) generated by it is arranged at a defined distance (L) from the housing wall (W), in that a connecting part (FA) placed against the housing wall (W), in which part the end (FE) of the fibre (F) is fixed in location at the defined distance (L) from the front end (VE) of the connecting part (FA1) to be facing the wall (W), is adjusted by displacement in the directions (y, z) parallel to the wall (W) and fixed in location at the housing (Gh) in such a manner that the end (FE) of the fibre (F) is arranged at the focal point (Fk) of the light of the one wavelength (λ₁), and in that the detector is adjusted to the focal point (Fk1) of the free beam path (SG2) of the light of the other wavelength (λ₂) coming from the light beam divider (LT), which light emerges divergently from the end (FE) of the fibre (F) and is focused by the lens (KL2) remote from the transmitter, and is fixed in location.

22. Method for producing a module according to Claim 18, characterized in that the transmitter (LD) and the lens (KL1) close to the transmitter are adjusted relative to one another in all three directions (x, y, z) on the carrier body (TK) permanently connected to the housing (Gh), in such a manner that the light of the one wavelength (λ₁) focused by this lens (KL1) emerges through an opening (GO) in an opposite wall (W) and the optical axis (A) of this focused light is perpendicular to this wall (W), in that the light beam divider (LT) and the connecting part (FA2), in which the lens (KL2) remote from the transmitter, together with the end (FE) of the fibre (F), is accommodated and fixed in location, are aligned with this axis (A) and fixed in location at the housing (Gh), care being taken during the alignment of the connecting part (FA2) that the common axis (B) of fibre (F) and lens (KL2) remote from the transmitter coincides with the axis (A) of the focused light of the one wavelength (λ₁), and in that the detector is adjusted to the focal point (Fk1) of the beam path (SG2) of the light of the other wavelength (λ₂), coming from the light beam divider (LT), and is fixed in location in such a manner that the light divergently emerges from the end (FE) of the fibre (F) and is focused by the lens (KL2) remote from the transmitter.

23. Method for producing a module according to Claim 19, characterized in that the connecting part (FA2), in which the lens (KL2) remote from the transmitter, together with the end (FE) of the fibre (F), is accommodated and fixed in location, is adjusted at the housing wall (W) and fixed in location in such a manner that the axis (A) of a light of the other wavelength (λ₂), which divergently emerges from the end (FE) of the fibre (F) and is focused by the lens (KL2) remote from the transmitter, is aimed at the transmitter (LD) fixed in location on the carrier body (TK) in the housing (Gh), in that the light beam divider (LT) is adjusted to this axis (A) and fixed in location, in that the detector (D) is aligned with the focal point (Fk1) in the free beam path (SG2) coming from the light beam divider (LT) and is fixed in location, and in that thereafter the lens (KL1) close to the transmitter is adjusted to the transmitter (LD) in all three directions (x, y, z) in such a manner that the end (FE) of the fibre (F) and the light exit point (LAS) of the transmitter (LD) are imaged on one another.

24. Method according to one of Claims 21 to 23, characterized in that at least the relative alignment of transmitter (LD) and lens (KL1) close to the transmitter is monitored magnified on a television screen (M).

## Revendications

1. Module d'émission et de réception pour un réseau de communication optique bidirectionnel, notamment pour un réseau ISDN à large bande, comportant
- un émetteur optique (LD) servant à émettre une longueur d'onde de lumière déterminée (λ₁),
- deux lentilles optiques (KL1, KL2), disposées l'une derrière l'autre dans le trajet du rayonnement (SG) de la lumière émise d'une manière divergente par l'émetteur (LD) et parmi lesquelles la lentille (KL2), qui est proche de l'émetteur, focalise la lumière divergente et la lentille (KL2), qui est éloignée de l'émetteur, focalise cette lumière focalisée sur un foyer déterminé (Fk),
- un dispositif (SG) de séparation du faisceau de lumière, qui est disposé dans le trajet du rayonnement (SG1) de la lumière entre les deux lentilles (KL1, KL2) et est transparent pour une longueur d'onde (λ₁) et qui sépare une lumière, émise avec une forme divergente par le foyer (Fk) de la lumière possédant la longueur d'onde (λ₁) en direction de la lentille (KL2), qui est éloignée de l'émetteur, et est focalisée par cette lentille (KL2) et possède une autre longueur d'onde déterminée (λ₂, au moins partiellement à partir du trajet de rayonnement (SG) de la lumière possédant la longueur d'onde (λ₁),
- un détecteur (D), qui est sensible à la seconde longueur d'onde (λ₂) et auquel est envoyée la lumière qui possède la seconde longueur d'onde (λ₂) et est séparée du trajet de rayonnement (SG), et
- un boîtier (Gh), dans lequel sont logés au moins l'émetteur (LD), la lentille (KL1), qui est proche de l'émetteur, le dispositif (LT) de séparation du faisceau de lumière et le détecteur (D), et dans lequel une extrémité (FE) peut être raccordée à une fibre optique de telle sorte que cette extrémité (FE) est disposée au foyer (Fk), qui est fixe par rapport au boîtier (Gh1), de la lumière possédant la longueur d'onde (λ₁),
caractérisé par le fait
que l'émetteur (LD) et la lentille (KL1), qui est proche de l'émetteur, sont fixés sur un corps de support commun (TK), qui est raccordé ou peut être raccordé de façon fixe au boîtier et sert de puits de chaleur pour l'émetteur (LD), et qu'un bloc (QB), réalisé en un matériau qui conduit la chaleur plus mal que le corps de support (TK), est prévu entre la lentille (KL2), qui est proche de l'émetteur, et le corps de support (TK).

2. Module suivant la revendication 1, caractérisé par le fait que le corps de support (TK) possède une partie étagée (St), et que l'émetteur (LD) est fixé sur une surface plus élevée (F11) du corps de support (TK), tandis que la lentille (KL1), qui est proche de l'émetteur, est fixée sur une surface plus basse (F12) du corps de support (TK), à la hauteur de l'émetteur (LD).

3. Module suivant la revendication 2, caractérisé par le fait que le bloc (QB) formé d'un matériau mauvais conducteur de la chaleur est fixé par brasage, par une surface métallisée (SF1), au moyen d'une brasure (Lt1), sur la surface plus basse (F12) du corps de support (TK), qu'une plaquette de support (TP1) possédant une surface métallique (Sf1) est brasée au moyen d'une brasure (Lt2) sur une face métallisée (SF2), tournée à l'opposé de cette surface plus basse (F12), du bloc (QB) et que la lentille (KL1), qui est proche de l'émetteur, est fixée sur la plaquette de support (TP1).

4. Module suivant l'une des revendications 1 à 3, caractérisé par le fait que le dispositif (LT) de séparation du faisceau de lumière est agencé de telle sorte que la lumière, qui est séparée du trajet de rayonnement (SG1) de la lumière Possédant la longueur d'onde (λ₁) et qui possède l'autre longueur d'onde (λ₂), rencontre le détecteur (D) essentiellement perpendiculairement au trajet de rayonnement (SG1) de la lumière possédant la longueur d'onde (λ₁), et est focalisée sur le détecteur (D).

5. Module suivant la revendication 4, caractérisé par le fait que le dispositif (LT) de séparation du faisceau de lumière est constitué par un miroir partiellement transparent (VS, P), qui est sélectif du point de vue des longueurs d'onde, est incliné sous un certain angle par rapport à l'axe (A) du trajet de rayonnement (SG1) de la lumière possédant la longueur d'onde (λ₁) et est transparent pour une longueur d'onde (λ₁) et est réfléchissant pour l'autre longueur d'onde (λ₂).

6. Module suivant la revendication 5, caractérisé par le fait que le miroir partiellement transparent (VS, P), qui est sélectif du point de vue des longueurs d'onde, possède un filtre interférentiel.

7. Module suivant la revendication 6, caractérisé par le fait que le filtre interférentiel est réalisé sous la forme d'une couche multiple diélectrique (VS), qui est déposée sur une plaquette (P) en matériau transparent.

8. Module suivant l'une des revendications 5 à 7, caractérisé par le fait que dans le trajet libre du rayonnement (SG2) de la lumière possédant l'autre longueur d'onde (λ₂) et envoyée au détecteur (D), est disposé un filtre optique (Fi1), qui est opaque pour une longueur d'onde (λ₁) et est au contraire transparent pour l'autre longueur d'onde (λ₂).

9. Module suivant la revendication 4, caractérisé par le fait que le dispositif (LT) de séparation du faisceau de lumière est constitué par un miroir partiellement transparent (TP), qui est disposé dans le trajet du rayonnement (SG1) de la lumière possédant la longueur d'onde (λ₁), entre les deux lentilles (KL1, KL2), et fait un certain angle par rapport à l'axe (A) de ce trajet de rayonnement (SG1), et possède un comportement de transmission ou de réflexion identique pour les deux longueurs d'onde (λ₁, λ₂), et par un filtre optique (Fi), qui est disposé dans le trajet libre de rayonnement (SG2) de la lumière possédant l'autre longueur d'onde (λ₁) et envoyée au détecteur (D), et qui est opaque pour la longueur d'onde (λ₁), tandis qu'il est transparent pour l'autre longueur d'onde (λ₂).

10. Module suivant la revendication 9, caractérisé par le fait que le miroir partiellement transparent (TP) est agencé sous la forme d'une plaquette réalisée en un matériau qui est partiellement transparent de la même manière pour les deux longueurs d'onde (λ₁, λ₂).

11. Module suivant la revendication 9 ou 10, caractérisé par le fait que le filtre (Fi) est réalisé sous la forme d'une plaquette constituée en un matériau opaque pour une longueur d'onde (λ₁) alors qu'il est transparent pour l'autre longueur d'onde (λ₂).

12. Module suivant l'une des revendications 8 à 11, caractérisé par le fait que le filtre (Fi1; Fi) est déposé directement sur le détecteur (D).

13. Module suivant l'une des revendications 8 à 12, caractérisé par le fait que le filtre (Fi1; Fi) est réalisé sous la forme d'un filtre interférentiel.

14. Module suivant l'une des revendications 4 à 13, caractérisé par le fait que la lentille (KL1), qui est proche de l'émetteur, focalise la lumière émise selon une forme divergente par l'émetteur (LD) et possédant la longueur d'onde (λ₁), sous la forme d'une lumière parallèle ou faiblement divergente, et que dans le trajet libre de rayonnement (SG2) de la lumière possédant l'autre longueur d'onde (λ₂) est disposée une lentille (KL3), qui focalise cette lumière sur le détecteur (D).

15. Module suivant l'une des revendications 4 à 13, caractérise par le fait que la lentille (KL1), qui est proche de l'émetteur, focalise la lumière (λ₁), qui est émise avec une forme divergente par l'émetteur (LK), en une lumière plus faiblement divergente, qui est focalisée par la lentille (KL2) éloignée de l'émetteur, de sorte que cette lentille (KL2) focalise d'elle-même une lumière possédant l'autre longueur d'onde (λ₂), et qui est émise avec une forme divergente par le foyer (Fk), le détecteur (D) étant disposé au foyer (Fk1) de cette lumière.

16. Module suivant l'une des revendications précédentes, caractérisé par le fait que l'une des lentilles est une lentille sphérique.

17. Module suivant l'une des revendications précédentes, caractérisé par le fait que la lentille (KL2), qui est éloignée de l'émetteur, est logée et fixée dans le boîtier (Gh).

18. Module suivant l'une des revendications 1 à 17, caractérisé par le fait que la lentille (KL2), qui est éloignée de l'émetteur, est logée et fixée, conjointement avec l'extrémité (F1) de la fibre (F), dans une partie de raccordement (FA2), qui peut être raccordée au boîtier (Ga).

19. Module suivant l'une des revendications précédentes, caractérisé par le fait que le détecteur (D) et un préamplificateur électrique (VV), branché en aval du détecteur (D), sont intégrés sur un substrat commun, qui est disposé dans le boîtier (Gh).

20. Module suivant l'une des revendications précédentes, caractérisé par le fait que l'extrémité (FE) de la fibre optique peut être raccordée au boîtier (Gh1).

21. Procédé pour fabriquer un module suivant la revendication 18, caractérisé par le fait qu'on règle l'émetteur (LD) et la lentille (KL1), qui est proche de l'émetteur, l'un par rapport à l'autre, dans l'ensemble des trois directions (x, y, z), sur le corps de support (TK) raccordé de façon fixe au boîtier (Gh), de sorte que la lumière, qui est focalisée par cette lentille (KL1) et possède la longueur d'onde (λ₁), sort par une ouverture (GO) ménagée dans une paroi opposée (W) du boîtier et que l'axe optique (A) de cette lumière focalisée est essentiellement perpendiculaire à cette paroi (W), qu'on ajuste le dispositif (LT) de séparation du faisceau de lumière et la lentille (KL2), qui est éloignée de l'émetteur, sur cet axe (A) et qu'on le fixe sur le boîtier (Gh), la lentille (KL2), qui est éloignée de l'émetteur, étant réglée de telle sorte que le foyer (Fk), qu'elle produit, est disposé à une distance définie (L) de la paroi (W) du boîtier, qu'on règle une partie de raccordement (FA), qui est montée sur la paroi (W) du boîtier et dans laquelle l'extrémité (FE) de la fibre (F) est fixée à la distance définie (L) de l'extrémité avant (VE), tournée vers la paroi (W), de la partie de fixation (FA1), par translation dans les directions (y, z) parallèles à la paroi (W) et qu'on la fixe sur le boîtier (Gh) de telle sorte que l'extrémité (FE) de la fibre (F) est disposée au foyer (Fk) de la lumière possédant la longueur d'onde (λ₁), et qu'on règle le détecteur sur le foyer (Fk) du trajet de rayonnement libre (LGT) de la lumière possédant l'autre longueur d'onde (λ₂), qui sort du dispositif (LT) de séparation du faisceau de lumière et qu'on le fixe, cette lumière sortant avec une forme divergente hors de l'extrémité (FE) de la fibre (F) et étant focalisée par la lentille (KL2), qui est éloignée de l'émetteur.

22. Procédé pour fabriquer un module suivant la revendication 18, caractérisé par le fait qu'on règle l'émetteur (LD) et la lentille (KL1), qui est proche de l'émetteur, l'un par rapport à l'autre, dans l'ensemble des trois directions (x, y, z), sur le corps de support (TK) raccordé de façon fixe au boitier (Gh), de telle sorte que la lumière possédant la longueur d'onde (λ₁) et focalisée par cette lentille (KL1), sort par une ouverture (GO) ménagée dans une paroi opposée (W) et que l'axe optique (A) de cette lumière focalisée est perpendiculaire à cette paroi (W), qu'on ajuste le dispositif (LT) de séparation du faisceau de lumière et la partie de raccordement (FA2), dans laquelle la lentille (KL2) éloignée de l'émetteur est logée et fixée conjointement avec l'extrémité (FE) de la fibre (F), sur cet axe (A) et qu'on le fixe sur le boîtier (Gh), auquel cas lors de l'ajustement de la partie de raccordement (FA2), il faut veiller à ce que l'axe commun (B) de la fibre (F) et de la lentille (KL2), qui est plus éloignée de l'émetteur, coïncide avec l'axe (A) de la lumière focalisée possédant la longueur d'onde (λ₁), et qu'on règle le détecteur au foyer (Fk1) du trajet de rayonnement (LG2) de la lumière possédant la seconde longueur d'onde (λ₂), qui sort du dispositif (LT) de séparation du faisceau de lumière et qu'on le fixe, de telle sorte que la lumière sort avec une forme divergente au niveau de l'extrémité (FE) de la fibre (F) et est focalisée par la lentille (KL2), qui est éloignée de l'émetteur.

23. Procédé pour fabriquer un module suivant la revendication 19, caractérisé par le fait qu'on règle et qu'on fixe la partie de raccordement (FA2), dans laquelle on règle et on fixe la lentille (KL2) éloignée de l'émetteur conjointement avec l'extrémité (FE) de la fibre (F), sur la paroi (W) du boîtier de telle sorte que l'axe (A) d'une lumière qui possède l'autre longueur d'onde (λ₂), sort avec une forme divergente au niveau de l'extrémité (FE) de la fibre (F) et est focalisée par la lentille (KL2) qui est éloignée de l'émetteur, est dirigée sur l'émetteur (LD), qui est placé dans le boîtier (Gh) sur le corps de support (TK), qu'on ajuste et on fixe le dispositif (LT) de séparation du faisceau de lumière sur cet axe (A), qu'on ajuste et qu'on fixe le détecteur (D) sur le foyer (Fk1) dans le trajet de rayonnement libre (LG2) qui sort du dispositif (LT) de séparation du faisceau de lumière et qu'ensuite on ajuste la lentille (KL1) proche de l'émetteur dans l'ensemble des trois directions (x, y, z) sur l'émetteur (LD) de telle sorte que les images de l'extrémité (FE) de la fibre (F) et du point de sortie de la lumière (LAS) de l'émetteur (LD) sont formées l'une sur l'autre.

24. Procédé suivant l'une des revendications 21 à 23, caractérisé par le fait qu'au moins l'ajustement relatif de l'émetteur (LD) et de la lentille (KL), qui est la plus proche de l'émetteur, est contrôlé en vue agrandie sur un écran de télévision (M).
